# EUROPEAN PATENT APPLICATION

(11) **EP 1 187 470 A2**
(43) Date of publication of application: **13.03.2002**
(21) Application number: 01120975.6
(22) Date of filing: 31.08.2001
(51) Int. Cl.: H04N 5/445

(54) **Television programme selection means**

(30) Priority: 02.09.2000 GB 0021548
(71) Applicant: Pace Micro Technology PLC, Saltaire, Shipley, BD14 3LF (GB)
(72) Inventor: Moir, Mark, Cambridge, Cambridgeshire CB5 9QF (GB)
(74) Representative: Wood, Graham

(57) **Abstract**

The invention relates to a television system of the type which includes a display screen, a broadcast data receiver for the reception of video, audio and auxiliary data from a broadcast service provider and the generation of television programmes therefrom for display on the display screen and via speakers. The system allows a user to select a viewing time period in which they wish to watch a programme, typically in its entirety. The system identifies those of the available programmes at the start of the viewing time period which can be watched in their entirety in said period and indicates the same to the user who can then select to watch the same or one of the same. The user can therefore quickly select a television programme for a given period of time thereby greatly reducing the time which may be spent flicking through channels to find a suitable programme.

## Description

This invention relates to a programme selection means for a television system.

It is often the case that a television user will have only a limited period of time in which to watch the television before they have to go out or they have to do something else. The user may waste this limited period of television viewing by channel hopping to find a particular programme of interest however the time taken to find the programme may take up the available viewing time so that the user then has no time left to actually watch the selected programme.

There are now increasing numbers of television channels available on television systems and so switching from channel to channel to find a suitable programme can typically take a long period of time. As such, the user may end up not watching anything of interest in the time period available which can be frustrating for the user and therefore undesirable to the broadcast service provider as the provider typically relies upon the user paying a subscription for the service.

Furthermore a user may select a programme to watch and not realise that the programme is longer than the limited time period that is available for them to watch it in. This can be annoying for the user, particularly if the programme is a film in which users generally like to see the beginning and the end thereof in one viewing.

It is therefore an aim of the present invention to provide a user with a means for rapidly selecting a television programme of interest suitable for watching in a limited time period.

According to a first aspect of the present invention there is provided a television programme selection system, said system including means for use by the system user to allow the selection of a television programme by interaction with a display screen and a broadcast data receiver for the generation of audio, visual and auxiliary data from digital data received from a broadcast service provider, and characterised in that said system includes a means for a viewing time period to be selected which suits the users availability and, in response to the selected viewing time period, the system determines which of the available programmes can be watched in their entirety, substantially in their entirety or with respect to other selected criteria, in the viewing time period and indicates any such programmes to the user.

Typically the indicated programmes are those which are suitable for viewing in their entirety in the selected viewing time period and the user can then select one of said indicated programmes for viewing in the selected viewing time period.

Typically, if no programmes are available for viewing in their entirety in the selected viewing time period, a message is displayed on screen and the user can then, if they wish, redefine the viewing time period such as, for example, to extend the same.

Preferably the selected viewing time period for which the television system identifies suitable programmes is selected by the user.

In one embodiment the selected viewing time period starts at the instant of the user interaction with the system to select the viewing period such that the user only has to indicate the end time of the period. Alternatively, the start and end times of the selected viewing time period may both be in the future and be selected by the user.

In one embodiment the user can type into the television system the start and end times of the period which their viewing time is to be limited to.

In an alternative embodiment the user can utilise a remote control device of the type commonly provided with television systems to select the viewing time period and also subsequently select programmes from those indicated. In one embodiment a number of time period options are displayed on the display screen for selection by the user via the remote control device.

In a further aspect of the invention there is provided a method of selecting a television programme for viewing from a number of available programmes via a television system, said method comprising the steps of the user selecting an appropriate viewing time period, activating a programme selection system in the television system, said programme selection system searching for a programme or programmes from all those which can be generated during that time period from data received from a broadcast service provider and those programmes which can be viewed in their entirety or substantially in their entirety or in relation to some other criteria selected by the user, and which are therefore suitable for viewing in the selected viewing time period are indicated to the user for selection.

Preferably the television system can search for both television programmes which can be generated from data previously received and held in memory means and also programmes which can be generated from data currently transmitted to the system.

Preferably the memory means is in or connected to the broadcast data receiver.

Preferably means are provided to allow a user to input into the television system the types of programmes they would like to watch during the selected time period.

In one embodiment an electronic programme guide (EPG) maintains a database of the types of programmes the user likes to watch. This list of programmes can be pre-selected by the user or based on the type of programme frequently watched by the user, public ratings of the programme, the actors in the programmes, a particular football team the programme relates to and/or the like.

EPGs are provided in television systems due to the large numbers of channels and programs available for selection. This large number of channels and programs makes conventional listing means inadequate. The EPG stores programme information in an easily accessible format, such as the subject matter of the programme, the length of the programme, the time of showing of the programme and/or the like.

Preferably the television system can search for a suitable programme to fill the time period using the EPG information.

Preferably a cancellation button is provided such that if the user does not wish to watch the programme or programmes suggested by the television system, the cancellation button prevents the television system from being tuned into the suggested programme, thereby allowing the user to look at other programme suggestions.

An advantage of the present invention is that the user can quickly select a television programme from a number of possible options indicated by the television system as being suitable for watching during a pre-selected time period, thereby greatly reducing the time which may be spent flicking through channels to find a suitable channel.

An embodiment of the present invention will now be described with reference to the accompanying figures wherein:
Figure 1 is an example of a display screen of the invention.
Figure 2 is a further example of the display screen of the invention.

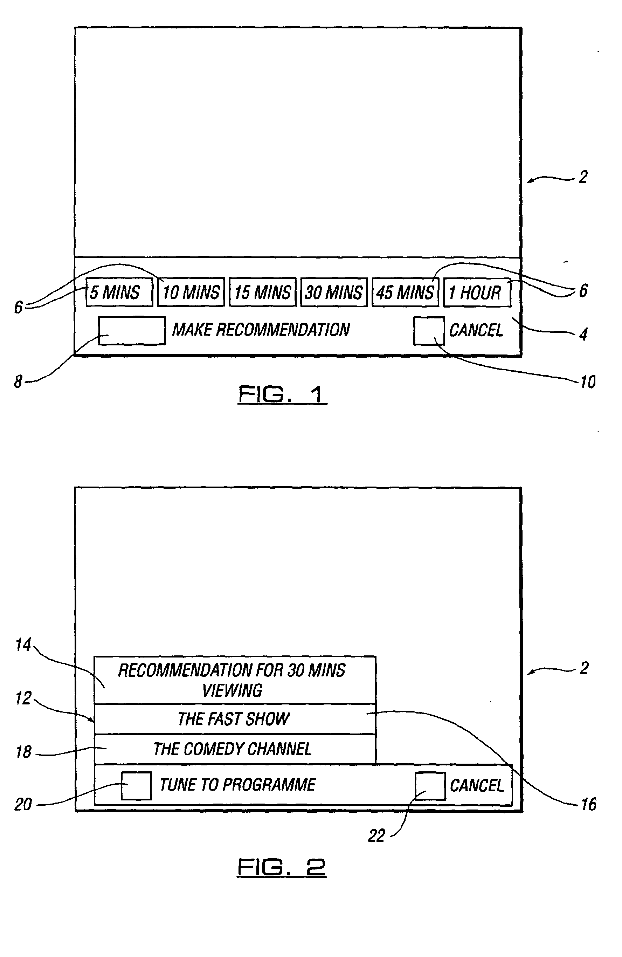

Referring firstly to Figure 1, there is illustrated an example of a display screen 2 for a television system. The television system is provided with means for time limited programme selection according to a selected viewing time period in the following manner.

A menu bar 4 can be selected by the user, typically by depressing an appropriate key on a remote control means, to appear on display screen 2. The menu bar 4 includes a plurality of user selectable portions or icons 6, each portion representing a different time period, a "make recommendation" button 8 and a cancel button 10.

In use, if the user has, for example, only a limited time for viewing television programmes and wishes to be able to view an entire programme in that time they can follow the steps outlined as follows. The user brings up the menu bar 4 on the display screen 2 and selects a portion 6 which is appropriate to the viewing time period they have available to watch the television.

The user then presses the "make recommendation" key 8 to initiate searching of the broadcast data receiver database for a suitable programme or programmes which can be watched during the selected viewing time period. Typically the data used for the generation of the EPG on the display screen, includes the start and end times of programmes and this data can be referred to with respect to the selected viewing time period start and end times.

In this example, the television system has selected one appropriate programme from the available programmes and window display 12 appears on display screen 2, as shown in Figure 2. The window 12 displays the selected viewing time period 14, the title of the suggested programme 16 identified by the television system that can be watched during the selected time period, the channel 18 on which the suggested programme is being shown and an acceptance icon 20 which when selected via the remote control device results in the television system being tuned to the channel 18.

A Cancel icon 10 can be displayed on menu bar 4, to allow the user to select the same and cancel the time period selected. A Cancel icon 22 can be provided on window 12 to allow the user to cancel the suggested programme if the user does not approve of the programme selection made.

Once cancellation of the suggested programme has been made, a further programme suggestion can be made or alternatively the user can return to manually selecting a programme in a conventional manner.

Although the invention need not be used to only select programmes which will be shown in their entirety in the selected viewing time period it is likely that the invention has greatest utility when it is used to suggest a programme which will run for a length of time similar to that of the selected time period. However, in other examples, if the user has only a small period of time available, such as 5 or 10 minutes, the television system is unlikely to find a whole programme to fit into the selected time period. For example, films and entertainment shows typically require the user to watch the whole programme and so these types of programmes are likely to be unsuitable for suggestion. In this case the television can select programmes of belonging to categories which can be watched for small periods of time without it mattering that the entire length of the programme is not watched. For example, sporting events, news features, documentaries and cartoons can be suggested by the television system which frequently only last for 5-10 minutes.

The user can select buttons within the menu bars and windows using the remote control, a mouse or controls on the broadcast data receiver and/or similar.

The user can input suggestions into the television system of the type of programmes they are interested in watching. For example, a drop down menu can be provided which displays a list of possible topics or types of television programmes for selection. A favourites menu can also be used where the user has previously selected a number of programmes or channels and which are stored in the memory of the television system.

The EPG can be used to maintain a database of the types of programmes the user likes to watch. This can be based on programme type, ratings, a particular team, the actors involved and/or the like. The television system can then use this EPG data to suggest possible programmes to watch in the limited time period selected.

Thus the present invention provides a means of selecting television programmes for viewing in pre-selected time periods without the user having to waste time searching through a plurality of programmes.

## Claims

1. A television programme selection system, said system including means for use by the system user to allow the selection of a television programme by interaction with a display screen and a broadcast data receiver for the generation of audio, visual and auxiliary data from digital data received from a broadcast service provider, and **characterised in that** said system includes a means for a viewing time period to be selected which suits the users availability and, in response to the selected viewing time period, the system determines which of the available programmes can be watched in their entirety, substantially in their entirety or with respect to other selected criteria, in the viewing time period and indicates any such programmes to the user.

2. A system according to claim 1 **characterised in that** the indicated programmes are those which are suitable for viewing in their entirety in the selected viewing time period and the user can then select one of said indicated programmes for viewing.

3. A system according to claim 1 **characterised in that** if no programmes are available for viewing in their entirety in the selected viewing time period, a message is displayed on screen to indicate this to the user.

4. A system according to claim 3 **characterised in that** if no programmes are available the user can redefine the viewing time period and repeat the programme search.

5. A system according to claim 1 **characterised in that** the selected viewing time period for which the television system identifies suitable programmes is selected by the user.

6. A system according to claim 1 **characterised in that** the selected viewing time period starts at the instant of the user interaction with the system to select the viewing period such that the user only has to indicate the end time of the period.

7. A system according to claim 1 **characterised in that** the start and end times of the selected viewing time period may both be in the future and be selected by the user

8. A system according to claim 1 **characterised in that** the user can type into the television system the start and end times of the period which their viewing time is to be limited to.

9. A system according to claim 1 **characterised in that** the user utilises a remote control device of the type commonly provided with television systems to select the viewing time period and also subsequently select programmes from those indicated as being available.

10. A system according to claim 9 **characterised in that** a number of time period options are displayed on the display screen for selection by the user via the remote control device.

11. A method of selecting a television programme for viewing from a number of available programmes via a television system, said method comprising the steps of the user selecting an appropriate viewing time period, activating a programme selection system in the television system, said programme selection system searching for a programme or programmes from all those which can be generated during that time period from data received from a broadcast service provider and those programmes which can be viewed in their entirety or substantially in their entirety or in relation to some other criteria selected by the user, and which are therefore suitable for viewing in the selected viewing time period, are indicated to the user for selection.

12. A method according to claim 11 **characterised in that** the system searches for suitable programmes from programmes which can be generated from data previously received and held in memory means in the broadcast data receiver which forms part of the television system, and programmes which can be generated from data currently transmitted to the system.

13. A method according to claim 11 **characterised in that** the method includes the additional step of allowing the user to input into the television system the type or types, in terms of user specified criteria, of programmes they would like to watch during the selected time period.

14. A method according to claim 11 **characterised in that** the search for the programmes is made with respect to data received from the broadcast service provider for use in the generation of an Electronic Programme Guide (EPG) on the display screen, said data including the start and end times of all the programmes available for viewing and which start and end times can be compared with the start and end times of the selected viewing time period.

15. A method according to claim 11 **characterised in that** if the user does not wish to watch the programme or programmes indicated by the television system, the television system can be used in a normal manner with the user manually selecting a programme to watch regardless of whether it matches the selected viewing time period.
